# EUROPÄISCHE PATENTSCHRIFT

(11) **EP 1 770 251 B1**
(45) Veröffentlichungstag und Bekanntmachung des Hinweises auf die Patenterteilung: **12.12.2012**
(21) Anmeldenummer: 06120410.3
(22) Anmeldetag: 11.09.2006
(51) Int. Cl.: F28D 7/00, F16L 53/00, F01N 3/20

(54) **Beheizbarer Schlauchleitungsmodul für Abgasnachbehandlungsanlagen von Brennkraftmaschinen**
Heatable hose pipe module for exhaust treating devices of internal combustion engines
Module de tuyauterie souple chauffable pour dispositifs de traitement de gaz d'échappement de moteurs à combustion interne

(30) Priorität: 28.09.2005 DE 102005046562; 13.04.2006 DE 102006017396
(43) Veröffentlichungstag der Anmeldung: 04.04.2007
(73) Patentinhaber: ContiTech Techno-Chemie GmbH, 61184 Karben (DE)
(72) Erfinder: Behrendt, Waldemar, 63486, Bruchköbel (DE); Kirsch, Christof, 61194, Niddatal (DE)
(74) Vertreter: Finger, Karsten

(56) Entgegenhaltungen:
- EP-A- 0 021 597
- EP-A- 0 533 522
- EP-A- 1 388 648
- EP-A- 1 582 732
- EP-A- 1 698 769
- DE-U1- 20 320 585
- DE-U1-202004 018 697
- JP-A- 2003 172 591
- JP-A- 2005 076 915
- JP-A- 2005 090 431

## Beschreibung

Die Erfindung betrifft eine Vorrichtung und ein Verfahren zur Abgasnachbehandlung einer Brennkraftmaschine gemäß den Merkmalen der Patentansprüche 1 und 11.

Zur Verminderung von Stickoxidemissionen einer Brennkraftmaschine ist es bekannt, mit Hilfe der Selectiv-Catalytic-Reduktions-Technologie (SCR) Stickoxid in Luftstickstoff und Wasserdampf umzuwandeln. Als Reduktionsmittel wird wässerige Harnstofflösung verwandt, die in einem separaten Vorratsbehälter mitgeführt wird. Die wässrige Harnstofflösung wird aus dem Vorratsbehälter über ein Fördermodul bzw. eine Pumpe herausgefördert und einem Dosiermodul zugeführt, von dem die Harnstofflösung dosiert in den Abgasstrom vor dem Katalysator eingespritzt wird. Überschüssiges Reduktionsmittel wird von dem Fördermodul über einen Rücklauf zurück in den Vorratsbehälter geleitet.

Zwischen dem Vorratsbehälter, dem Fördermodul und dem Dosiermodul sind Schlauchleitungen zur Förderung des Reduktionsmittels vorhanden. Diese Schlauchleitungen werden über geeignete Anschlussarmaturen mit den genannten Aggregaten verbunden.

Die Schlauchleitungen zwischen Vorratsbehälter und der Abgasleitung müssen beheizbar sein, da die Gefahr des Einfrierens der wässrigen Harnstofflösung ab minus 11°C besteht. Es ist bekannt, die Gefahr des Einfrierens durch elektrisch beheizbare Schläuche abzuwenden. Obwohl diese elektrisch beheizbaren Schläuche sich bewährt haben, sind Anwendungsfälle vorhanden, in denen diese technische Lösung nicht greifen kann, wenn z.B. zu wenig elektrische Leistung vorhanden ist.

Eine Vorrichtung gemäß dem Oberbegriff des Anspruchs 1 ist aus der
EP 1 388 648 A1 bekannt. Bei der aus dieser Druckschrift bekannten Vorrichtung ist der Reduktionsmittelbehälter in einem Dieseltank angeordnet und über eine Leitung mit dem Abgasrohr verbunden, durch das das Abgas geführt wird. Die Leitung wird mit Hilfe des Dieselkraftstoffes aufgeheizt. Dazu führt eine Leitung von dem Einspritzsystem zurück zu dem Dieselkraftstoffbehälter und umschließt die Reduktionsmittelleitung bereichsweise koaxial.

Mit Hilfe der aus der bekannten Vorrichtung ist eine Aufheizung des Reduktionsmittels auch in der Reduktionsmittelleitung möglich. Es ist jedoch festzustellen, dass die aus der EP 1 388 648 A1 bekannte Vorrichtung einen komplexen Aufbau aufweist. Dies liegt darin begründet, dass die Dieselleitung und die Reduktionsmittelleitung bereichsweise koaxial geführt werden, was an sich bereits aufwendig ist. Hinzu kommt, dass die Reduktionsmittelleitung in dem Bereich, wo sie in die Abgasleitung eintritt, aus der die Dieselleitung heraustreten muss, was ebenfalls sehr aufwendig ist.

Aus der EP 1 698 769 A2 ist eine Vorrichtung gemäß dem Oberbegriff des Anspruchs 1 bekannt. Bei der aus dieser Druckschrift bekannten Vorrichtung werden die Röhren für das Reduktionsmittel bzw. für das Heizwasser in einer einzigen Hauptröhre geführt, die vorzugsweise aus Gummimaterial besteht. Die Hauptröhre wird an ein Aggregat angeschlossen, wobei die eine Röhre auf einen ersten Anschlussstutzen und die andere Röhre auf einen zweiten Anschlussstutzen geführt wird.

Aus der JP 2005 090 431 ist eine Vorrichtung zur Abgasnachbehandlung einer Brennkraftmaschine bekannt, bei der durch den Vorratsbehälter für die wässerige Harnstofflösung geheiztes Kühlwasser geführt wird, um ein Einfrieren der Harnstofflösung zu vermeiden. Wenn das Kühlwasser eine zu hohe Temperatur aufweist, um die gewünschten chemischen Reaktionen in der Vorrichtung hervorzurufen, wird über ein Ventil der Zufluss von Kühlwasser in den Vorratsbehälter unterbunden.

Die JP 2003 172 591 beschreibt allgemein einen Wärmetauscher, in dem zwei Wärmeübertragungsleitungen geführt werden. Die Leitungen sind in einen Träger mit Trägerelementen und eingeklipst, in dem sie parallel geführt werden.

Der Erfindung liegt die Aufgabe zugrunde, eine Vorrichtung der eingangs geschilderten Art zu schaffen, die einen Einfrierschutz der wässrigen Harnstofflösung mit geringerem Aufwand und technisch sicher ermöglicht.

Die Aufgabe wird erfindungsgemäß durch die Merkmale im Kennzeichen des Patentanspruchs 1 gelöst.

Das Heizwasser erwärmt die es führende Schlauchleitung, die aufgrund ihrer engen Nachbarschaftsanordnung die Wärmeenergie auf die die Harnstofflösung führende Schlauchleitung transferiert. Als Heizwasser kann aus dem Kühlwasserkreislauf der Brennkraftmaschine abgezweigtes temperiertes Kühlwasser verwendet werden.

In den Mediumsstrom wird ein Strangprofil mit längs verlaufenden Ausnehmungen eingesetzt. Der Querschnitt der Ausnehmungen ist ein nicht ganz geschlossener Kreis. Er ist etwas geschlossener als halbkreisförmig. In dieses Strangprofil werden Schlauchleitungen eingeklipst. In enger Nachbarschaft sind Harnstoff und Heizwasser führende Leitungen im Strangprofil angeordnet.

Gemäß Anspruch 4 werden die Leitungen jeweils über Kreuz eingeklipst, damit zwischen den Heizwasserleitungen die Harnstoffleitungen laufen und umgekehrt. Vorzugsweise ist je eine Harnstoffvor- und -rücklaufleitung angeordnet, zwischen denen eine Vor- und eine Rücklaufleitung für Heizwasser eingeklipst sind.

Die Heizwasserleitungen heizen sich und das Profil im Einsatz auf und dadurch natürlich auch die Harnstoftleitungen. Durch die erfindungsgemäße Ausbildung des Strangprofils wird eine große Flächenberührung der Leitungskomponenten erreicht. Durch diese Flächenberührung wird eine bessere Wärmeübertragung erzielt.

Das Strangprofil und die einzelnen einzuklipsenden Leitungen sind so ausgeführt, dass die Leitungen (Rohre) im Profil verschiebbar sind, um eine die Verbiegung des Verbundkörpers gewährleistende Flexibilität zu erhalten.

In einer vorteilhaften Ausgestaltung der Erfindung ist in dem Strangprofil annähernd zentrisch ein durchlaufender Hohlraum eingebracht. In diesem kann an vordefinierten Stellen ein Aluminiumrohr eingebracht werden, um den Verbundkörper dauerhaft an diesen definierten Stellen biegen bzw. verformen zu können.

Die in das Strangprofil einklippsbaren Leitungen können sowohl Schlauchleitungen aus Gummi oder auch Kunststoffleitungen (beispielsweise aus PA oder PU) sein.

Das Strangprofil aus Gummi herzustellen ist besonders dann vorteilhaft, wenn die medienführenden Leitungen aus Kunststoff sind. Das Gummiprofil verhindert dann bei Biegungen ein Ein- oder Abknicken des Kunststoffrohres.

Die notwendige Volumenzunahme der das Reduktionsmittel führenden Schlauchleitungen, die beim Einfrieren der Harnstofflösung entsteht, kann durch das Gummistrangprofil kompensiert werden.

Vorteilhafterweise wird der notwendige Einbauraum durch die erfindungsgemäße Ausbildung minimiert, da alle Leitungen dicht beieinander liegen und zusammen geführt werden.

Vorteilhafterweise ist das vier längs verlaufende Ausnehmungen aufweisende Strangprofil axial teilbar, so dass zu Anschlusszwecken jeweils ein Harnstoffschlauch mit einem

Heizwasserschlauch weitergeführt und damit auch weiter beheizt werden kann. Diese beiden Schläuche münden dann in einem gemeinsamen Anschluss.

Für die Anschlüsse werden beheizbare Verbindungsblöcke verwendet, welche derart ausgebildet sind, dass das temperierbare Kühlwasser durch sie durchgespült wird, während die Schlauchleitung der Harnstofflösung endet. Das hat den Vorteil, dass nicht nur die Schläuche, sondern auch die Steckverbinder der Verbindungsblöcke aufgetaut werden. Diese Anschlüsse können als kostengünstiges Spritzgussteil ausgeführt oder aber auch aus einem Harnstoff beständigen Metall gelötet werden, wodurch die Wärmeleitfähigkeit erheblich gesteigert werden kann.

Für die Harnstoffanschlüsse an die Aggregate sind Steckverbinder einsetzbar. Die Anschlüsse der Kühlwasserleitungen können sowohl Steckverbinder sein, welche erst im Einbauzeitpunkt angeschlossen werden, als auch Einbindungen, in denen die Verbindung zum Vor- und Rücklauf schon vorkonfektioniert ist.

Durch die beheizbaren Anschlüsse ist der gesamte Leitungszweig der Harnstofflösung von dem Vorratsbehälter bis zur Abgasleitung mit einer durchgehenden direkten Beheizbarkeit ausgestattet. Eine Kältebrücke innerhalb des Leitungszweiges ist nicht mehr vorhanden.

Die Erfindung betrifft auch ein Verfahren zur Abgasnachbehandlung gemäß dem nebengordneten Anspruch 10.

Durch die Erfindung kann auf die Bereitstellung von elektrischer Energie zum Auftauen bzw. Erwärmen der Harnstofflösung, der sie fördernden bzw. speichernden Aggregate und der verbindenden Schlauchleitungen ganz oder teilweise verzichtet werden.

Anhand der Zeichnung wird nachstehend ein Ausführungsbeispiel der Erfindung näher erläutert. Es zeigt
- Fig. 1: in schematischer und streckenmäßig unterbrochener Darstellung ein die Harnstoff- und Heizwasserleitungen führendes Strangprofil, das paarig aufgeteilt an Anschlussblöcken der Aggregate einer Reduktionsmittelanlage endet,
- Fig 2: in Einzelteildarstellung, das einer Einbauflucht nachgebogene Strangprofil mit zwei eingeklippsten Harnstoffleitungen und zwei eingeklippsten Heizwasserleitungen,
- Fig. 3: einen Querschnitt durch das vier Ausnehmungen aufweisende Strangprofil.

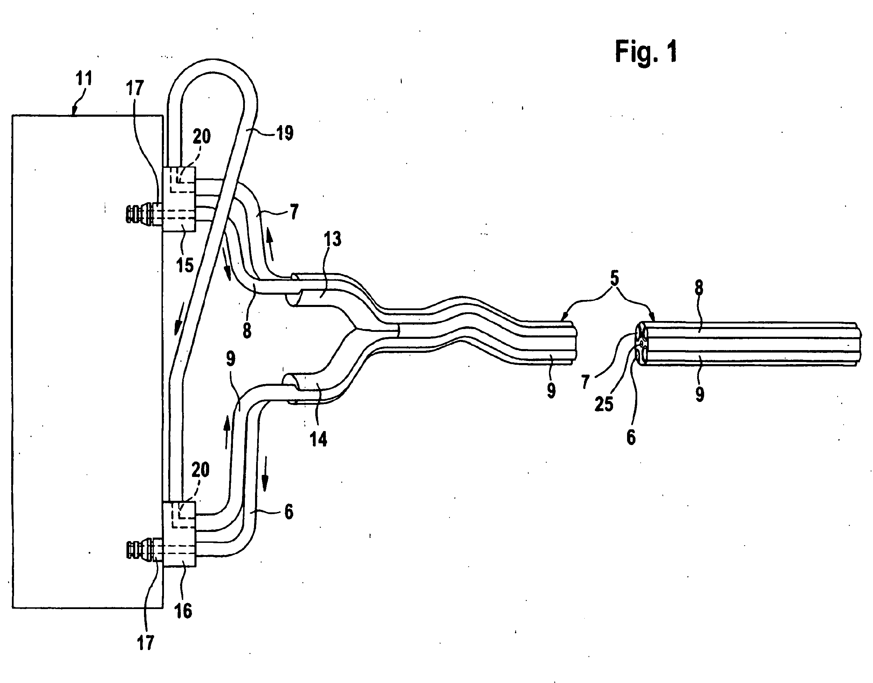

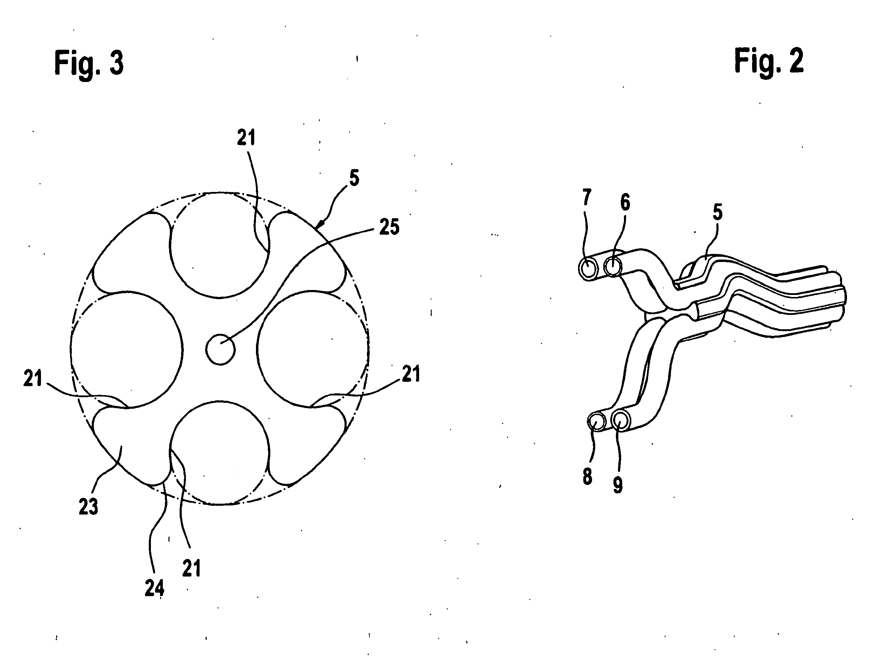

In einem aus elastomerem Material hergestellten Strangprofil 5 mit kreisförmigem Umfang sind vier Schlauchleitungen 6,7,8 und 9 in entsprechende Umfangsausnehmungen des Strangprofils 5 eingeklipst (Fig. 1 und Fig. 2). Die Schlauchleitungen 6,7,8 und 9 sind mit ihrem einen Ende mit einem hier nicht gezeigten Reduktionsmittelvorratsbehälter (Tank) verbunden. Die Schlauchleitungen 6 und 8 bilden eine Vorlauf- und eine Rücklaufleitung für die Harnstofflösung. Die zwischen ihnen eingeklipsten Schlauchleitungen 7 und 9 führen Heizwasser und bilden eine Vorlauf- und eine Rücklaufleitung für das Heizwasser.

Die Schlauchleitungen 6,7,8, und 9 verlaufen mit dem Strangprofil 5 zu einem schematisch dargestellten Fördermodul 11, von dem die benötigte Menge Harnstofflösung zum nicht gezeigten Dosiermodul befördert wird.. Dabei ist das Strangprofil 5 in kurzem Abstand vor dem Fördermodul 11 axial in zwei Zweige 13 und 14 aufgetrennt. Jeder Zweig 13 bzw. 14 enthält dadurch ein Schlauchleitungspaar 6,9 bzw. 8,7 aus einer Harnstoffleitung und einer Heizwasserleitung. Jedes Schlauchleitungspaar 6,9 bzw. 8,7 ist an seinem Ende mit einem Anschlußblock 15 bzw. 16 verbunden, der auf seiner den Schlauchenden entgegengesetzten Fläche einen Steckverbinder 17 aufweist, der in das Aggregat, hier das Fördermodul 11 eingesteckt ist. Der Anschlussblock 15 stellt so eine Fluidverbindung für den Harnstoffvorlauf und der Anschlußblock 16 stellt so eine Fluidverbindung für den Harnstoffrücklauf mit dem Fördermodul 11 dar.

Die jeweils eine Durchflussbohrung 20 aufweisenden Anschlussblöcke 15 bzw. 16 werden über einen Heizwasserschlauch 19 verbunden.

Das von der Schlauchleitung 7 herangeführte Heizwasser wird in dem Anschlußblock 15 radial umgelenkt und über die Verbindungsschlauchleitung 19 zu dem anderen Anschlußblock 16 geführt, tritt dort ein und verlässt es über die den Heizwasserrücklauf bildende Schlauchleitung 9. Heizwasser und Harnstofflösung strömen in dem Leitungssystem somit in entgegengesetzter Richtung. In anderen Anwendungsfällen ist es auch möglich, die Heizwirkung über in gleicher Richtung strömende Medien zu erreichen.

Das aus einem wärmeleitenden elastomerem Werkstoff bestehende Strangprofil 5 ist entsprechend der gewünschten Einbauflucht gebogen. In Fig. 2 wird dieses beispielhaft und schematisch gezeigt. Die eingeklipsten Schlauchleitungen 6,7,8 und 9 folgen diesem Biegungsverlauf zwangsweise, was insbesondere bei der Verwendung von Kunststoffrohrleitungen statt elastomerer Schlauchleitungen von Vorteil ist. Eine Knickgefahr der Kunststoffrohrleitungen aufgrund der Biegungen wird minimiert.

In Fig. 3 wird das Strangprofil 5 im Querschnitt gezeigt. Es weist vier gleichmäßig über den Umfang verteilte, axial verlaufende Ausnehmungen 21 auf. Diese Ausnehmungen 21 sind etwas mehr als halbkreisförmig, so dass ihr lichter Öffnungsabstand etwas geringer ist als der Außendurchmesser der einzuklipsenden Schlauch- oder Rohrleitungen. Die zwischen den kreisförmigen Ausnehmungen 21 liegenden, elastischen Stege 23 sind an ihren beiden äußeren Begrenzungen 24 abgerundet, was eine bessere Einklipsbarkeit der Schlauchleitungen ermöglicht.

In dem Strangprofil (5) ist annähernd zentrisch ein durchlaufender Hohlraum (25) eingebracht. In diesem kann an vordefinierten Stellen ein Aluminiumrohr eingebracht werden.

### Bezugszeichenliste

- 5: Strangprofil
- 6: Schlauchleitung, Harnstofflösung
- 7: Schlauchleitung, Heizwasser
- 8: Schlauchleitung, Harnstofflösung
- 9: Schlauchleitung, Heizwasser
- 11: Fördermodul
- 13: Strangprofilzweig
- 14: Strangprofilzweig
- 15: Anschlussblock
- 16: Anschlussblock
- 17: Steckverbinder
- 19: Heizwasserschlauch
- 20: Durchflussbohrung
- 21: Axial verlaufende Ausnehmungen
- 23: Elastische Stege
- 24: Äußere Begrenzungen
- 25: Hohlraum

## Patentansprüche

1. Vorrichtung zur Abgasnachbehandlung mittels der selektiven katalytischen Reduktion von Stickoxiden aus dem Abgas einer Brennkraftmaschine durch Einbringen eines flüssigen Reduktionsmittels in das Abgas der Brennkraftmaschine mit einem das Reduktionsmittel aufnehmenden Reduktionsmittelbehälter, einer Reduktionsmittelpumpe zum Fördern des Reduktionsmittels, einem Dosiermodul zum Einspritzen des Reduktionsmittels in den Abgasstrom vor dem Reduktionskatalysator und einer beheizbaren Reduktionsmittelleitung zwischen dem Reduktionsmittelbehälter und der Reduktionsmittelpumpe und/oder der Reduktionsmittelförderpumpe und dem Dosiermodul und dem Dosierventil,
**dadurch gekennzeichnet,**
**dass** eine Reduktionsmittel führende Schlauchleitung (6) für den Vorlauf und eine Reduktionsmittel (8) führende Schlauchleitung (8) für den Rücklauf vorhanden ist, und dass zu jeder Reduktionsmittel führenden Schlauchleitung (6;8) eine Heizwasser führende Schlauchleitung (7;9) paarig in enger Nachbarschaft wärmeabgebend angeordnet ist, wobei die Leitungspaare (6,7 bzw. 8,9) in zum Außenumfang offenen, axial verlaufenden Ausnehmungen (21) eines aus einem wärmeleitfähigen elastomeren Werkstoff bestehenden Strangprofils (5) angeordnet sind.

2. Vorrichtung nach Anspruch 1, **dadurch gekennzeichnet,**
**dass** die Schlauchleitungen (6,7,8,9) in die Ausnehmungen (21) eingeklipst sind.

3. Vorrichtung nach Anspruch 1 bis 2, **dadurch gekennzeichnet,**
**dass** der Querschnitt der Ausnehmungen (21) ein nicht ganz geschlossener Kreis ist, vorzugsweise geringfügig größer als halbkreisförmig.

4. Vorrichtung nach Anspruch 1 bis 3, **dadurch gekennzeichnet,**
**dass** das Strangprofil (5) vier axial verlaufende Ausnehmungen (21) aufweist, in die je zwei Harnstofflösung und Heizwasser führende Schlauchleitungen (6,7,8,9) über Kreuz eingeklipst sind, so dass die Harnstoff führenden Leitungen (6,8) immer von Heizwasser führenden Leitungen (7,9) benachbart sind.

5. Vorrichtung nach Anspruch 4, **dadurch gekennzeichnet,**
**dass** das vier Ausnehmungen (21) aufweisende Strangprofil (5) sich in seinem Verlauf in zwei Zweige (13 und 14) aufteilt, wobei jeder Zweig (13 bzw. 14) ein Leitungspaar (6,7 bzw. 8,9) aus Harnstoffleitung und Heizwasserleitung aufweist.

6. Vorrichtung nach Anspruch 5, **dadurch gekennzeichnet,**
**dass** jedes Leitungspaar (6,7 bzw. 8,9) in einem Anschlußblock (16 bzw. 15) endet, der einen Schnellverbinderanschluß (17) für die Harnstofflösung und einen Durchflußkanal (20) für das Heizwasser aufweist.

7. Vorrichtung nach einem der Ansprüche 1 bis 6, **dadurch gekennzeichnet,**
**dass** in dem Strangprofil (5) annähernd zentrisch ein durchlaufender Hohlraum (25) eingebracht ist, in dem an vordefinierten Stellen ein Aluminiumrohr eingebracht ist.

8. Vorrichtung nach einem der Ansprüche 1 bis 7, **dadurch gekennzeichnet,**
**dass** die in das Strangprofil (5) einklippsbaren Leitungen Schlauchleitungen aus Gummi oder Kunststoffleitungen vorzugsweise aus PA oder PU sind.

9. Vorrichtung nach Anspruch 8, **dadurch gekennzeichnet,**
**dass** bei der Verwendung von Kunststoffrohren das Strangprofil (5) aus Gummi ist.

10. Verfahren zur Abgasnachbehandlung mittels der selektiven katalytischen Reduktion von Stickoxiden aus dem Abgas einer Brennkraftmaschine durch Einbringen eines flüssigen Reduktionsmittels in das Abgas der Brennkraftmaschine, bei dem das Reduktionsmittel aus einem Reduktionsmittelbehälter durch eine Reduktionsmittelpumpe gefördert und bei bestimmten Betriebszuständen der Brennkraftmaschine in den Abgasstrom vor einem Reduktionskatalysator eingespritzt wird, wobei der Förderstrom eines Reduktionsmittels durch einen Wärmeenergie abgebenden Wasserkreislauf beheizt wird, der durch die Aggregate der Reduktionsmittelanlage und die sie verbindenden Schlauchleitungen geführt wird, wobei eine Reduktionsmittel führende Schlauchleitung (6) für den Vorlauf und eine Reduktionsmittel (8) führende Schlauchleitung (8) für den Rücklauf vorhanden ist, und wobei zu jeder Reduktionsmittel führenden Schlauchleitung (6;8) eine Heizwasser führende Schlauchleitung (7;9) paarig in enger Nachbarschaft wärmeabgebend angeordnet ist und wobei die Leitungspaare (6,7 bzw. 8,9) in zum Außenumfang offenen, axial verlaufenden Ausnehmungen (21) eines aus einem wärmeleitfähigen elastomeren Werkstoff bestehenden Strangprofils (5) angeordnet sind.

## Claims

1. Device for exhaust gas after treatment by means of the selective catalytic reduction of nitrogen oxides from the exhaust gas of an internal combustion engine by the introduction of a liquid reducing agent into the exhaust gas of the internal combustion engine, with a reducing agent container receiving the reducing agent, with a reducing agent pump for conveying the reducing agent, with a metering module for injecting the reducing agent into the exhaust gas stream upstream of the reduction catalyst and with a heatable reducing agent line between the reducing agent container and the reducing agent pump and/or the reducing agent feed pump and the metering module and metering valve, **characterized in that** a hose line (6) carrying reducing agent is present for the forward flow and a hose line (8) carrying reducing agent is present for the return flow, and **in that**, for each hose line (6; 8) carrying reducing agent, a hose line (7; 9) carrying heating water is arranged, as a pair in close proximity, so as to emit heat, the pairs of lines (6, 7 and 8, 9) being arranged in axially running recesses (21), open towards the outer circumference, of an extruded profile (5) consisting of a thermally conductive elastomeric material.

2. Device according to Claim 1, **characterized in that** the hose lines (6, 7, 8, 9) are snapped into the recesses (21).

3. Device according to Claims 1 and 2, **characterized in that** the cross section of the recesses (21) is an incompletely closed circle, preferably being slightly larger than semicircular.

4. Device according to Claims 1 to 3, **characterized in that** the extruded profile (5) has four axially running recesses (21), into which in each case two hose lines (6, 7, 8, 9) carrying urea solution and heating water are snapped crosswise, so that the lines (6, 8) carrying urea are always adjacent to lines (7, 9) carrying heating water.

5. Device according to Claim 4, **characterized in that** the extruded profile (5) having four recesses (21) is divided along its course into two branches (13 and 14), each branch (13 or 14) having a pair of lines (6, 7 and 8, 9) consisting of a urea line and of a heating water line.

6. Device according to Claim 5, **characterized in that** each pair of lines (6, 7 and 8, 9) ends in a connection block (16 or 15) which has a quick-action connector junction (17) for the urea solution and a throughflow duct (20) for the heating water.

7. Device according to one of Claims 1 to 6, **characterized in that** a continuous cavity (25), in which an aluminium tube is introduced at predefined locations, is introduced approximately centrically in the extruded profile (5).

8. Device according to one of Claims 1 to 7, **characterized in that** the lines capable of being snapped into the extruded profile (5) are hose lines consisting of rubber or plastic lines preferably consisting of PA or PU.

9. Device according to Claim 8, **characterized in that**, when plastic tubes are used, the extruded profile (5) consists of rubber.

10. Method for exhaust gas after treatment by means of the selective catalytic reduction of nitrogen oxides from the exhaust gas of an internal combustion engine by the introduction of a liquid reducing agent into the exhaust gas of the internal combustion engine, in which the reducing agent is conveyed out of a reducing agent container by a reducing agent pump and, in specific operating states of the internal combustion engine, is injected into the exhaust gas stream upstream of a reduction catalyst, the feed stream of a reducing agent being heated by a water circulation which emits heat energy and which is routed through the assemblies of the reducing agent system and the hose lines connecting them, a hose line (6) carrying reducing agent being present for the forward flow and a hose line (8) carrying reducing agent being present for the return flow, and, for each hose line (6; 8) carrying reducing agent, a hose line (7; 9) carrying heating water being arranged, as a pair in close proximity, so as to emit heat, and the pairs of lines (6, 7 and 8, 9) being arranged in axially running recesses (21), open towards the outer circumference, of an extruded profile (5) consisting of a thermally conductive elastomeric material.

## Revendications

1. Dispositif de traitement de gaz d'échappement par réduction catalytique sélective des oxydes d'azote des gaz d'échappement d'un moteur à combustion interne en apportant un agent réducteur liquide dans les gaz d'échappement du moteur à combustion interne,
le dispositif présentant un récipient d'agent réducteur qui reprend l'agent réducteur,
une pompe à agent réducteur qui transport l'agent réducteur,
un module de dosage qui injecte l'agent réducteur dans l'écoulement de gaz d'échappement en amont du catalyseur de réduction ou
un conduit d'agent réducteur, apte à être chauffé, entre le récipient d'agent réducteur et la pompe à agent réducteur et/ou entre la pompe de transport d'agent réducteur, le module de dosage et la soupape de dosage,
**caractérisé en ce que**
un conduit flexible (6) qui reprend l'agent réducteur est prévu pour l'amenée et un conduit flexible (8) qui reprend l'agent réducteur (8) est prévu pour le retour,
**en ce qu'**un conduit flexible (7; 9) qui reprend de l'eau chaude est disposé à proximité étroite de chaque conduit flexible (6; 8) conduisant l'agent réducteur pour lui délivrer de la chaleur, les paires (6, 7 ou 8, 9) de conduits étant disposées dans des découpes (21) ouvertes à leur périphérie extérieure et s'étendant axialement dans profilé extrudé (5) constitué d'un matériau élastomère conducteur de la chaleur.

2. Dispositif selon la revendication 1, caractérisé en que les conduits flexibles (6, 7, 8, 9) sont engagés élastiquement dans les découpes (21).

3. Dispositif selon les revendications 1 et 2, **caractérisé en ce que** la section transversale des découpes (21) est un cercle incomplètement fermé et est de préférence légèrement plus grande que celle d'un demi-cercle.

4. Dispositif selon les revendications 1 à 3, **caractérisé en ce que** le profilé extrudé (5) présente quatre découpes (21) qui s'étendent axialement, dans chacune desquelles les deux conduits transportant une solution d'urée et les deux conduits transportant de l'eau chaude (6, 7, 8, 9) sont engagés élastiquement en croix de telle sorte que les conduits (6, 8) conduisant de l'urée soient toujours voisins des conduits (7, 9) conduisant l'eau chaude.

5. Dispositif selon la revendication 4, **caractérisé en ce que** le profilé extrudé (5) qui présente les quatre découpes (21) est divisé en deux branches (13 et 14), chaque branche (13 ou 14) présentant une paire (6, 7 ou 8, 9) constituée de conduits d'urée ou de conduits d'eau chaude.

6. Dispositif selon la revendication 5, **caractérisé en ce que** chaque paire de conduits (6, 7 ou 8, 9) se termine en un bloc de raccordement (16 ou 15) qui présente un raccord rapide (17) pour la solution d'urée et un canal de passage (20) pour l'eau chaude.

7. Dispositif selon l'une des revendications 1 à 6, **caractérisé en ce qu'**une cavité continue (25) dans laquelle un tube d'aluminium est placé en des emplacements prédéfinis est prévu sensiblement au centre du profil extrudé (5).

8. Dispositif selon l'une des revendications 1 à 7, **caractérisé en ce que** les conduits qui peuvent être engagés élastiquement dans le profilé extrudé (5) sont des conduits flexibles en caoutchouc ou des conduits en matière synthétique, de préférence en PA ou en PU.

9. Dispositif selon la revendication 8, **caractérisé en ce que** lorsque l'on utilise des tubes en matière synthétique, le profilé extrudé (5) est en caoutchouc.

10. Procédé de traitement de gaz d'échappement par réduction catalytique sélective d'oxydes d'azote des gaz d'échappement d'un moteur à combustion interne en apportant un agent réducteur liquide dans les gaz d'échappement du moteur à combustion interne, et dans lequel l'agent réducteur est transporté depuis un récipient d'agent réducteur par une pompe à agent réducteur et est injecté dans certains états de fonctionnement du moteur à combustion interne dans l'écoulement de gaz d'échappement en amont d'un catalyseur de réduction, l'écoulement de transport d'un agent réducteur étant chauffé par un circuit d'eau qui lui délivre de l'énergie thermique et qui est formé par les éléments de l'installation à agent réducteur et les conduits flexibles qui les relient, un conduit flexible (6) conduisant l'agent réducteur étant prévu pour l'amenée et un conduit flexible (8) conduisant l'agent réducteur (8) étant prévu pour le retour, un conduit flexible (7, 9) qui reprend l'eau chaude étant disposé au voisinage étroit des conduits flexibles (6; 8) transportant l'agent réducteur de manière à leur délivrer de la chaleur, les paires (6, 7 et 8, 9) de conduits étant disposées dans des découpes (21) ouvertes à leur périphérie extérieure et s'étendant axialement dans profilé extrudé (5) constitué d'un matériau élastomère conducteur de chaleur.
